# EUROPÄISCHE PATENTSCHRIFT

(11) **EP 3 374 533 B1**
(45) Veröffentlichungstag und Bekanntmachung des Hinweises auf die Patenterteilung: **17.04.2019**
(21) Anmeldenummer: 17726572.5
(22) Anmeldetag: 17.05.2017
(51) Int. Cl.: C22C 9/04, F16C 33/12

(54) **SONDERMESSINGLEGIERUNG SOWIE SONDERMESSINGLEGIERUNGSPRODUKT**
HIGH TENSILE BRASS ALLOY AND HIGH TENSILE BRASS ALLOY PRODUCT
ALLIAGE DE LAITON À HAUTE RÉSISTANCE ET PRODUIT D'ALLIAGE DE LAITON À HAUTE RÉSISTANCE

(30) Priorität: 20.05.2016 DE 202016102693 U
(43) Veröffentlichungstag der Anmeldung: 19.09.2018
(73) Patentinhaber: Otto Fuchs - Kommanditgesellschaft -, 58540 Meinerzhagen (DE)
(72) Erfinder: PLETT, Thomas, 57392 Schmallenberg (DE); REETZ, Björn, 47800 Krefeld (DE); GUMMERT, Hermann, 41751 Viersen (DE)
(74) Vertreter: Haverkamp, Jens
(86) Internationale Anmeldenummer: PCT/EP2017/061803
(87) Internationale Veröffentlichungsnummer: WO 2017/198691

(56) Entgegenhaltungen:
- EP-A2- 1 712 648
- WO-A2-2015/117972

## Beschreibung

Die Erfindung betrifft eine Sondermessinglegierung und ein Produkt aus einer Sondermessinglegierung, das einer Reibbelastung unterliegt.

Für typische Reibanwendungen in einer Schmiermittelumgebung werden generell niedrige Reibwerte der verwendeten Legierung gefordert, wobei zusätzlich der Reibwert in vorgegebenen Grenzen an die jeweilige Anwendung, insbesondere den Reibpartner, den verwendeten Schmierstoff und die Reibbedingungen, wie Anpressdruck und Relativgeschwindigkeit, anpassbar sein sollte. Dies gilt für Kolbenbuchsen, auf die hohe statische und dynamische Lasten wirken, ebenso wie für Synchronringe. Des Weiteren fordern Anwendungen mit hohen Relativgeschwindigkeiten der Reibpartner, wie sie beispielsweise für Axiallager eines Turboladers vorliegen, Legierungen, die neben einer reduzierten Wärmeentwicklung auch eine gute Wärmeableitung von der Reibfläche sicherstellen.

Durch die Reibleistung und den Ölkontakt entsteht auf der Lagerfläche eine tribologische Schicht mit angelagerten Schmiermittelkomponenten. Dabei wird eine gleichmäßige und zugleich hohe Anlagerungsrate der Schmiermittelbestandteile und deren Abbauprodukte gefordert, um an der Gleitschicht eine hinreichend stabile Adsorptionsschicht zu erhalten.

Ferner zeichnet sich ein geeigneter Werkstoff für ein in einer Ölumgebung eingesetztes Bauteil, beispielsweise einen Synchronring oder ein Lagerteil für ein Lager in einer solchen Umgebung zusätzlich durch eine breitbandige Ölverträglichkeit aus, sodass der Aufbau der tribologischen Schicht weitgehend unempfindlich gegen die Wahl bestimmter Öladditive ist. Zudem soll ein aus einer solchen Legierung hergestelltes Bauteil gute Notlaufeigenschaften aufweisen, sodass eine hinreichende Standzeit auch unter Trockenreibungsbedingungen sichergestellt werden kann.

Für reibbelastete Bauteile ist zusätzlich wichtig, dass die eingesetzte Legierung eine hinreichende Festigkeit aufweist. Entsprechend sollte eine hohe 0,2 %-Dehngrenze vorliegen, um die unter Last auftretenden plastischen Verformungen möglichst gering zu halten. Ungeachtet dessen soll ein solches Bauteil ein gewisses Maß für eine plastische Verformung oberhalb der Dehngrenze bis zu einem Versagen aufweisen.

Zusätzlich wird für derartige Bauteile gefordert, dass diese besonders hart und zugfest sind, um deren Widerstand gegen abrasive und adhäsive Belastungen zu erhöhen. Zugleich wird eine ausreichende Zähigkeit als Schutz gegen stoßende Beanspruchungen verlangt. In diesem Zusammenhang wird gefordert, die Anzahl der Mikrodefekte zu verringern und das von diesen ausgehende Defektwachstum zu verlangsamen. Dies geht einher mit der Forderung, eine Legierung mit einer möglichst hohen Bruchzähigkeit anzugeben, die weitgehend frei von Eigenspannungen ist.

Geeignete Legierungen für reibbeanspruchte Bauteile sind vielfach Sondermessinge, die neben Kupfer und Zink als Hauptbestandteile eine Zulegierung wenigstens eines der Elemente Nickel, Eisen, Mangan, Aluminium, Silizium, Titan oder Chrom aufweisen. Dabei erfüllen insbesondere Siliziummessinge die voranstehend genannten Anforderungen, wobei CuZn31Si1 eine Standardlegierung für Reibanwendungen, etwa für Kolbenbuchsen, darstellt. Ferner ist bekannt, Zinnbronzen, die neben Zinn und Kupfer zusätzlich Nickel, Zink, Eisen und Mangan aufweisen, für Reibanwendung oder auch für den Bergbau einzusetzen.

Aus WO 2014/152619 A1 ist eine Messinglegierung zur Verwendung in Turboladerlageranwendungen bekannt. Diese ist mit 1,5 bis 3,0 Gew.-% sehr manganhaltig, verfügt hingegen nur über einen geringen Sn-Anteil, und zwar von weniger als 0,4 Gew.-%. Diese vorbekannte Messinglegierung lässt einen Pb-Gehalt von maximal 0,1 Gew.-% zu, wodurch diese Legierung den strengeren Anforderungen an eine Pb-Freiheit genügt. Blei (Pb) als Legierungsbestandteil wird jedoch gerne in Messinglegierungen eingebaut, da hierdurch ein Spanbruch begünstigt und daher eine spanende Bearbeitung verbessert ist. Zudem ist Blei als Korrosionsinhibitor typischerweise in hochfeste Messinglegierungen eingebaut, deren Legierungsprodukte in einer Ölumgebung zum Einsatz gelangen. Dieses gilt vor allem für solche Ölumgebungen, die mit Bio-Ethanol in Kontakt gelangen. Bio-Ethanol ist im Kraftstoff von Fahrzeugen enthalten und gelangt beispielsweise durch Undichtigkeiten in den Kolbenringen oder anderweitige Verschleppungen in das Motoröl. Dieses gilt insbesondere für solche Fahrzeuge, die vermehrt nur auf Kurzstrecken zum Einsatz gelangen und somit der Motor seine Betriebstemperatur nicht erreicht. Gleiches gilt für Turboladerlagerungen, die infolge des in den Abgasen enthaltenen Bioethanols und seiner Abfallprodukte einem aggressiven Gemisch ausgesetzt sind. Infolgedessen stellt sich in dem Öl ein saures Milieu ein. Zusammen mit dem in dem Öl enthaltenen Schwefel bildet sich mit dem in dem Legierungsprodukt enthaltenen Blei eine Bleisulfatdeckschicht aus. Dieses wirkt ähnlich einer Passivierungsschicht als Korrosionsinhibitor.

Einfluss auf die mechanische Belastbarkeit und auch die Korrosionsbeständigkeit hat auch das Gefüge einer solchen Messinglegierung, die in der Matrix unterschiedliche Phasen aufweisen kann. Messinglegierungsprodukte mit einem hohen Anteil an α-Phase zeichnen sich durch eine allgemein gute Korrosionsbeständigkeit, eine hohe Zähigkeit und Bruchdehnung und eine gute Kaltumformbarkeit aus. Nachteilig ist, dass derartige Legierungsprodukte ein eher schlechtes Warmumformvermögen sowie einen geringen Widerstand gegen Abrasion und Adhäsion aufweisen. Messinglegierungsprodukte mit β-Phase weisen hingegen einen hohen mechanischen Verschleißwiderstand, eine hohe Festigkeit, eine gute Warmumformbarkeit und eine geringe Adhäsion aus. Nachteilig ist bei diesen Legierungsprodukten jedoch eine relativ schlechte Kaltumformbarkeit, eine relativ geringe Zähigkeit sowie eine deutlich schlechtere Korrosionsbeständigkeit, verglichen mit einem Messinglegierungsprodukt mit α-Phase. Messingslegierungsprodukte mit γ-Phase zeichnet sich zwar durch eine gute Korrosionsbeständigkeit und einen guten mechanischen Verschleißwiderstand auf, haben jedoch eine geringe Zähigkeit und ein relativ geringes Umformvermögen zum Nachteil. Somit zeigt sich, dass jede Phase zwar Vorteile in dem einen oder anderen Sektor mit sich bringt, jedoch Nachteile in Kauf genommen werden müssen.

Bei Messinglegierungsprodukten der in Rede stehenden Art, die in einer Ölumgebung eingesetzt werden spielt, wie bereits angedeutet, auch die Korrosion eine Rolle. Insofern muss eine Legierung, aus der Legierungsprodukte gefertigt werden, die beispielsweise in einer Ölumgebung im Rahmen eines Axiallagers zum Einsatz gelangen, auch den diesbezüglichen Anforderungen genügen.

Auf einem Werkstück aus einer Kupferlegierung entsteht unter Reibbelastung bereits nach einer kurzen Kontaktzeit zum Schmiermittel eine Adsorptionsschicht, die vor allem aus Schmiermittelzusätzen besteht. Bei einer thermomechanischen Belastung bildet sich unter der Adsorptionsschicht eine Reaktionsschicht aus miteinander reagierenden Komponenten der Adsorptionsschicht und oberflächennahen Legierungsbestandteilen. Dabei bilden die Adsorptionsschicht und die Reaktionsschicht eine äußere Grenzschicht auf dem Kupferlegierungswerkstück, die von einer mehreren Mikrometer dicken, inneren Grenzschicht unterlagert ist. Aufgrund ihrer Nähe zur äußeren Grenzschicht wird diese sowohl durch die auf die Oberfläche wirkende mechanische Belastung als auch durch die chemischen Umwandlungsprozesse in der Reaktionsschicht beeinflusst. Im Bereich der inneren Grenzschicht können Diffusionsprozesse und Oxidationsvorgänge der Substratlegierung die Reaktionsschichtbildung beeinflussen.

Viele Schmierstoffe beinhalten Additive, wie schwefel- und phosphorhaltiger Zusätze, die bei entsprechender thermomechanischen Belastung durch den Reibkontakt korrosiv wirken können, was wiederum die Lebensdauer eines Werkstückes nicht unbeträchtlich herabsetzt. Es wurden bereits Kupferlegierungen vorgeschlagen, um die korrosive Wirkung von Schwefelbestandteilen im Schmiermittel zu reduzieren. Aus der JP S 60162742 A ist eine Kupferlegierung für die Lagerung eines Turboladers bekannt, die bezogen auf die Gewichtsanteile aus 57 - 61 % Cu, 2,5 - 3,5 % Pb besteht, wobei Fe und Zn als Verunreinigungen vorliegen können. Auf der Reibfläche soll sich eine stabile CuS-Schicht ausbilden.

Vielfach werden Schmierstoffen Additive mit der Zielsetzung zugegeben, die Korrosion auf einer Reibfläche zu verringern und den abrasiven Verschleiß zu mindern. Ein Beispiel eines solchen Korrosionsinhibitors (Anti-Wear-Wirkstoffs) stellt beispielsweise Zinkdialkyldithiophosphat dar. In der Reaktionsschicht bildet sich aus diesem Zuschlag ein die Oberfläche schützendes Phosphatglas. Hierzu findet idealerweise ein Austausch der Liganden des Additivs mit Legierungselementen sowie eine Einlagerung von Substratkationen statt, sodass sich eine belastbare Reaktionsschicht bildet. Allerdings hängen die Oberflächen schützenden Reaktionsprozesse von der Zusammensetzung der inneren Grenzschicht des Substratmaterials ab. Des Weiteren beeinflussen zusätzliche Additive den Prozess, da sie in der Adhäsionsschicht unter Umständen bezüglich der Anhaftung konkurrierend zu den Oberflächen schützenden Additiven wirken. Zusätzlich beachtlich sind das Legierungsgefüge, thermische Vorgänge der Reaktionsschicht im Hinblick auf die Wärmeableitung und lokale Temperaturspitzen für Schichtauf- und -abbauprozesse. Daher kann es in Abhängigkeit des jeweils vorliegenden tribiologischen Systems unter Umständen mit Beteiligung von Korrosionsinhibitoren sogar zu einem unerwünschten chemischen Abbauprozess der Reibschicht kommen.

Aus WO 2015/117972 A1 ist eine schmierstoffverträgliche Kupferlegierung bekannt, die gemäß einem Ausführungsbeispiel folgende Zusammensetzung aufweist:
60 % Cu,
4 % Al,
1,6 % Si,
3,2 % Ni,
0,9 % Fe,
0,9 % Mn,
0,2 % Sn,
0,02 % Pb und
einem Rest Zn (Die Angaben sind in Gew.-%).

Diese vorbekannte Legierung ist ausgerichtet, damit in der Matrix freies Silizium mit einem Anteil von zumindest 0,4 %, bevorzugt sogar mindestens 0,6 % oder in anderen siliziumhaltigen, nicht Silizid-Phasen vorliegt. Das freie Silizium wird dafür verantwortlich gemacht, dass sich in der tribiologischen Umgebung eine stabile Grenzschicht ausbildet. Dieses ist maßgeblich für die Schmierstoffverträglichkeit dieser vorbekannten Legierung verantwortlich.

Es wäre jedoch wünschenswert, wenn die Korrosionsbeständigkeit und die Notlauf-Eigenschaft verbessert werden könnten.

Der Erfindung liegt somit die Aufgabe zu Grunde, eine Sondermessinglegierung vorzuschlagen, aus der nicht nur Produkte hergestellt werden können, die sich durch eine hohe Festigkeit, einen reduzierten Verschleiß unter Reibbelastung sowie guten Notlaufeigenschaften bei Mangelschmierung und eine verbesserte Korrosionsbeständigkeit auszeichnen.
Gelöst wird diese Aufgabe erfindungsgemäß durch eine Sondermessinglegierung mit folgenden Legierungsbestandteilen
55 - 65 Gew.-% Cu;
1 - 2,5 Gew.-% Mn;
0,7 - 2 Gew.-% Sn;
0,2 - 1,5 Gew.-% Fe;
2 - 4 Gew.-% Ni;
2 - 5 Gew.-% Al;
0,2 - 2 Gew.-% Si;
max. 2,0 Gew.-% Co;
max. 0,1 Gew.-% Pb;
und Rest Zn nebst unvermeidbaren Verunreinigungen
wobei die Summe der Elemente Mn und Sn mindestens 1,7 Gew.-% und maximal 4,5 Gew.-% beträgt.

Als unvermeidbare Verunreinigungen werden im Rahmen dieser Ausführungen solche Elemente angesehen, die einzeln an der Legierung mit nicht mehr als 0,05 Gew.-% und in Summe nicht mehr als 0,15 Gew.-% ausmachen.

Die aus dieser Sondermessinglegierung hergestellten Legierungsprodukte weisen überwiegend eine β-Phase auf. Zu erwarten war daher, dass diese sich als gut warmumformbar und durch eine gute mechanische Verschleißbeständigkeit auszeichnen. Interessanterweise weisen die aus dieser Sondermessinglegierung hergestellten Legierungsprodukte jedoch eine Korrosionsbeständigkeit auf, wie man diese ansonsten nur von Messinglegierungsprodukten mit vornehmlich α-Phase her kennt. Dieses ist umso überraschender, da diese Sondermessinglegierung grundsätzlich bleifrei ist (innerhalb der tolerablen Grenzen, um noch als bleifrei bezeichnet zu werden). Schließlich entsprach es der herrschenden Lehre, dass Blei zum Erreichen einer bestimmten Korrosionsbeständigkeit bei einem Einsatz in säurehaltigen Ölumgebungen zwingender Legierungsbestandteil sein müsse, da der herrschenden Meinung folgend, auf Blei zur Ausbildung einer korrosionsinhibierenden Deckschicht nicht verzichtet werden kann. Bei dieser Sondermessinglegierung ist es jedoch auf Grund ihrer chemischen Zusammensetzung gelungen, nicht nur die beim Stand der Technik dem Legierungselement Blei zugeschriebenen Eigenschaften zu ersetzen, sondern sogar die Korrosionsbeständigkeit gegenüber üblichen Legierungsprodukten mit β-Phase in der Matrix signifikant zu verbessern. Bei dieser Sondermessinglegierung handelt es sich um eine Pb-freie Sondermessinglegierung, insbesondere im Sinne der Altautorichtlinie.

Von Besonderheit bei dieser Legierung ist, dass Mangan überwiegend in den Siliziden abgebunden ist, während Zinn in der β-Phase gelöst ist. Der nicht in den Siliziden abgebundene Mangan-Anteil ist in der α-Phase gelöst. Vorteilhaft ist dieses deswegen, da aufgrund des in der β-Phase gelösten Zinn nicht nur ein β-Deckschichtbildner vorhanden ist, sondern auch durch das in der α-Phase gelöste Mangan ein α-Deckschichtbildner vorhanden ist.

Die besondere Korrosionsbeständigkeit von Legierungsprodukten aus dieser Legierung in einer Ölumgebung wird insbesondere an den Gehalten der Elemente Mn und Sn und, falls in der Legierung vertreten, von Co, letzteres vorzugsweise zwischen 0,8 und 1,6 Gew.-% festgemacht. Untersuchungen haben gezeigt, dass es nicht nur auf die Beteiligung dieser Elemente ankommt, wobei Mn und Sn Legierungsbestandteile sind, und zwar in Summe zumindest mit 1,7 Gew.-%, jedoch in Summe nicht mehr als 4,5 Gew.-% überschreiten. Vielmehr ist es vorteilhaft, wenn der Mn-Gehalt und der Sn-Gehalt in einer ähnlichen Größenordnung am Aufbau der Legierung beteiligt sind. Die Beteiligung der Elemente Mn und Sn am Aufbau der Legierung in einer ähnlichen Größenordnung bedeutet, dass das Verhältnis von Mn zu Sn in einer Größenordnung zwischen etwa 1,25 und 0,85 liegt. Bei der beanspruchten Legierung wird der Mn-Gehalt genutzt, um das Existenzgebiet der α-Phase auszuweiten. Dieses führt dazu, dass das in der Legierung ebenfalls enthaltene Sn nicht vorzeitig in einer γ-Phase gebunden wird, sondern ebenso wie das Mn für die gewünschte Deckschichtbildung zur Verfügung steht. Zudem wird Sn auch für die gewünschten Notlaufeigenschaften eingesetzt. Aus diesem Grunde ist eine sorgfältige Abstimmung in der Beteiligung der Elemente Mn und Sn in der Legierung vorgenommen worden. Vorzugsweise liegt das Verhältnis Mn zu Sn zwischen 1,1 und 0,92, insbesondere zwischen 1,05 und 0,95.

Ist Co an der Legierung beteiligt, kann die Korrosionsbeständigkeit nochmals verbessert werden. Daher ist in einer bevorzugten Ausgestaltung Co zwischen 0,9 bis 1,6 Gew.-%, insbesondere zwischen 0,9 bis 1,5 Gew.-% und weiterhin insbesondere zwischen 0,9 und 1,1 Gew.-% als Legierungselement beteiligt. Co vermag die Aktivität anderer Legierungselemente zu beeinflussen und trägt somit zum Aufbau einer korrosionshemmenden Deckschichtbildung bei. Ist Co in der Legierung enthalten, ist dieses Element an einer Bildung von Mischsiliziden beteiligt, wobei im Rahmen dieser Legierungszusammensetzung dadurch ein höherer Anteil von Mn gelöst in der Matrix verbleibt und sodann für die gewünschte Deckschichtbildung in ausreichendem Umfange zur Verfügung steht. Insofern trägt bei einer Beteiligung von Co am Aufbau der Legierung in besonderem Maße die Ausbildung einer korrosionsinhibierenden Deckschicht bei.

Überraschend waren die guten Korrosionseigenschaften eines aus dieser Legierung hergestellten Legierungsproduktes auch deswegen, da Pb nicht grundsätzlich durch ein zusätzlich anderes Element ersetzt worden ist. Vielmehr wurden die guten korrosionsbeständigen Eigenschaften durch eine Erhöhung des Sn-Gehaltes sowie durch die bereits vorstehend angegebene interne Abstimmung vor allem mit dem Element Mn und, falls eine Legierung vorhanden, Co erreicht.

Die vorbeschriebenen Vorteile und positiven Eigenschaften der Sondermessinglegierung bzw. eines daraus hergestellten Sondermessinglegierungsproduktes liegen auch in dem Fe-Gehalt begründet, der nur in einer engen Spanne, und zwar zwischen 0,2 und 1,5 Gew.-% zugelassen ist, begründet. Diese zugelassene Fe-Spanne beträgt in einem Ausführungsbeispiel nur 0,5 bis 1,0 Gew.-% Fe. Interessant war zu beobachten, dass außerhalb des zugelassenen Fe-Anteils an der Sondermessinglegierung sich die beschriebenen Eigenschaften des daraus hergestellten Sondermessinglegierungsproduktes nicht einstellen, und zwar sowohl wenn der Fe-Gehalt zu gering ist als auch wenn der Fe-Gehalt höher ist.

Zu begründen ist die erhöhte Widerstandsfähigkeit eines aus dieser Legierung hergestellten Bauteils in Bezug auf Korrosionsbeanspruchungen auch damit, dass die aus dieser Legierung hergestellten Bauteile nur eine geringe elektrische Leitfähigkeit aufweisen, die sogar zum Teil geringer ist als diejenige von Referenzlegierungen. Somit sind elektrische Korrosionsströme gegenüber vorbekannten Legierungen dieser Art deutlich verringert.

Für die benötigten Notlaufeigenschaften, welches ein aus dieser Legierung hergestelltes Legierungsprodukt als Teil eines Lagers aufweisen soll, ist der Sn-Anteil maßgeblich verantwortlich. Somit kommt dem Legierungselement Sn im Rahmen dieser Legierung eine Doppelfunktion zu, namentlich Korrosionsschutz und Notlaufeigenschaften der Legierung.

Ein aus dieser Legierung hergestelltes Bauteil, welches einer üblichen Wärmebehandlung unterworfen ist, genügt in besonderem Maße vor allem den an ein solches Bauteil gestellten Festigkeitswerten, auch hinsichtlich der 0,2 %-Dehngrenze. Dieses ist besonders vorteilhaft für eine geometrische Anpassung der Reibpartner bei einem ersten Betrieb. Bei einem Axiallager handelt es sich hierbei um lokale mikroplastische Verformungen, damit die zusammenwirkenden Reibpartner sich hinsichtlich ihrer Oberflächengeometrie einander anpassen. Zugleich ist die Oberfläche eines aus dieser Legierung hergestellten Bauteils weich genug, um den Anforderungen an eine Einbettfähigkeit von Fremdpartikeln zu genügen. Hierdurch ist es in besonderer Weise möglich, Fremdpartikel gezielt dadurch unschädlich zu machen, dass diese in die Bauteil- oder Werkstückoberfläche eingebettet werden.

Aufgrund der vorbeschriebenen Eigenschaften eines aus dieser Legierung hergestellten Legierungsproduktes handelt es sich bei diesen Legierungsprodukten typischerweise um Teile von Axiallagern oder von Radiallagern. Gemäß einer bevorzugten Ausgestaltung sind Axiallagerteile aus dieser Legierung im Wege eines Schmiedeprozesses hergestellt worden. Legierungsprodukte als Radiallagerteile sind hingegen bevorzugt gepresst oder gezogen. Ein typisches Anwendungsbeispiel für ein Lagerbauteil aus dieser Legierung ist ein Turboladerlager.

Die bereits vorstehend beschriebenen positiven Eigenschaften dieser Legierung lassen sich nochmals verbessern, wenn gemäß einer ersten Ausgestaltung die Sondermessinglegierung folgende Zusammensetzung aufweist:
59 - 65 Gew.-% Cu, insbesondere 59,5 - 65 Gew.-% Cu;
1,3 - 2,3 Gew.-% Mn, insbesondere 1,4 - 2,3 Gew.-% Mn;
1,3 - 1,65 Gew.-% Sn, insbesondere 1,4 - 1,65 Gew.-% Sn;
0,5 - 1,5 Gew.-% Fe, insbesondere 0,5 - 1,5 Gew.-% Fe;
2,4 - 3,4 Gew.-% Ni, insbesondere 2,55 - 3,4 Gew.-% Ni;
3,1 - 4,1 Gew.-% Al, insbesondere 3,4 - 4,1 Gew.-% Al;
1,0 - 2 Gew.-% Si, insbesondere 1,05 - 2 Gew.-% Si;
max. 2,0 Gew.-% Co;
und Rest Zn nebst unvermeidbaren Verunreinigungen.

Ist eine Beteiligung von Co bei einer solchen Sondermessinglegierung nicht vorgesehen, weist diese vorzugsweise folgende Zusammensetzung auf:
59- 62 Gew.-% Cu, insbesondere 59,5 - 62 Gew.-% Cu;
1,3 - 1,65 Gew.-% Mn, insbesondere 1,4 - 1,65 Gew.-% Mn;
1,3 - 1,65 Gew.-% Sn, insbesondere 1,4 - 1,65 Gew.-% Sn;
0,5 - 1,0 Gew.-% Fe, insbesondere 0,6 - 1,0 Gew.-% Fe
2,4 - 3,4 Gew.-% Ni, insbesondere 2,55 - 3,4 Gew.-% Ni;
3,1 - 4,1 Gew.-% Al, insbesondere 3,4 - 4,1 Gew.-% Al;
1,0 - 1,7 Gew.-% Si, insbesondere 1,05 - 1,7 Gew.-% Si;
und Rest Zn nebst unvermeidbaren Verunreinigungen.

Die vorgenannten Sondermessinglegierungen können Pb enthalten, jedoch nur mit einem Maximalgehalt von 0,1 Gew.-%. Im letzteren Fall gilt eine solche Sondermessinglegierung als Pb-frei im Sinne der Altautorichtlinie.
In einer besonders bevorzugten Ausgestaltung dieser Sondermessinglegierung ist Pb kein aktiv in die Legierung eingebrachtes Legierungselement, sondern wird in die Legierungsschmelze nur durch Einsatz von Recyclingmaterial eingebracht. Es ist dabei darauf zu achten, dass die gewünschten Pb-Maximalgehalte nicht überschritten werden.

Typischer Weise bestehen die vorgenannten Sondermessinglegierungen ausschließlich aus den genannten Legierungsbestandteilen.
Aus dieser Sondermessinglegierung lassen sich fertig bearbeitete Gußteile, Schmiedeteile, fertig bearbeitete Strangpress-Halbzeuge oder gezogene Halbzeuge herstellen. Vor allem eignen sich Legierungsprodukte aus dieser Sondermessinglegierung, um aufgrund der besonderen Eigenschaften dieser Messinglegierung in einer Ölumgebung mit saurem Milieu, etwa durch Ethanoleintrag, eingesetzt werden zu können. Wenn gewünscht, kann eine Abschlussglühung bei diesen Legierungsprodukten vorgesehen sein. Nachfolgend ist die Erfindung anhand von konkreten Ausführungsbeispielen beschrieben. Verwiesen wird hierbei auf die beiliegenden Figuren. Es zeigen:
- **Fig. 1:**: eine lichtmikroskopische Aufnahme der Oberfläche eines ersten Probestückes aus einer ersten Legierung,
- **Fig. 2:**: lichtmikroskopische Aufnahmen von Proben aus derselben Legierung wie das Probenstück der Figur 1, jedoch stranggepresst,
- **Fig. 3:**: vier rasterelektronische Aufnahmen der stranggepressten Probe der Figur 2,
- **Fig. 4:**: die rasterelektronischen Aufnahmen der Bilder 1, 2 und 4 der Figur 3 mit den gekennzeichneten Bereichen, an denen EDX-Analysen durchgeführt wurden,
- **Fig. 5:**: ein Aushärtungsdiagramm der Probe der ersten Legierung,
- **Tab. 1:**: die EDX-Analysen der Probenpunkte der Figur 4,
- **Fig. 6:**: eine Mikrofotografie einer Probe aus der Legierung der vorangegangenen Figuren nach Durchführen eines Korrosionstestes,
- **Fig. 7:**: Mikrofotografien von Proben, die demselben Korrosionstest unterworfen worden sind aus einer ersten Vergleichslegierung,
- **Fig. 8:**: Mikrofotografien von Proben, die demselben Korrosionstest unterworfen worden sind aus einer zweiten Vergleichslegierung,
- **Fig. 9:**: eine lichtmikroskopische Aufnahme der Oberfläche einer Probe aus einer zweiten Legierung,
- **Fig. 10:**: lichtmikroskopische Aufnahmen von Proben aus derselben Legierung, jedoch stranggepresst,
- **Fig. 11:**: vier rasterelektronische Aufnahmen der stranggepressten Probe der Figur 10,
- **Fig. 12:**: rasterelektronische Aufnahmen an den Proben der Figur 11 mit den gekennzeichneten Bereichen, an denen EDX-Analysen durchgeführt wurden,
- **Fig. 13:**: ein Aushärtungsdiagramm der Probe der zweiten Legierung,
- **Fig. 14:**: Mikrofotografien einer Probe aus der zweiten Legierung nach Durchführen eines Korrosionstestes und
- **Tab. 2:**: die EDX-Analysen der Probenpunkte der Figur 12.

### Versuch 1:

In einer ersten Versuchsreihe wurde aus einer Legierung folgender Zusammensetzung:

| | Cu | Mn | Sn | Fe | Ni | Al | Si | Zn |
|---|---|---|---|---|---|---|---|---|
| Probe 1 | 60,7 | 1,5 | 1,5 | 0,8 | 3,0 | 3,8 | 1,4 | Rest |

Probestücke gegossen und stranggepresst.

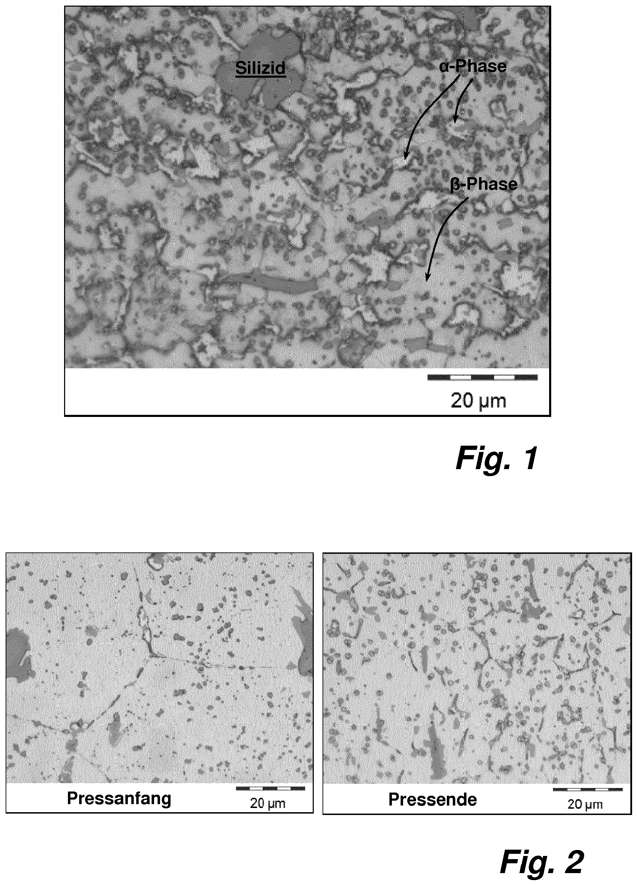

Die in Figur 1 gezeigte lichtmikroskopische Aufnahme der Gussprobe zeigt deutlich das Vorherrschen der β-Phase gegenüber der α-Phase. Erkennbar sind Silizide. Die Korngröße der β-Phase ist um ein Mehrfaches größer als diejenige der α-Phase, die mit einer durchschnittlichen Korngröße von etwa 7 - 10µm angegeben werden kann.

Dasselbe Bild zeigt sich auch bei den stranggepressten Proben aus derselben Legierung, bei denen die Silizide aufgrund des Strangpressvorganges am Pressende (siehe Figur 2 rechts) bedingt durch den Pressvorgang gestreckt sind.

In beiden Proben beträgt der Anteil intermetallischer Phasen etwa 6%. Der α-Mischkristallanteil beträgt maximal 6%. Der Rest ist durch den β-Mischkristallanteil bestimmt.

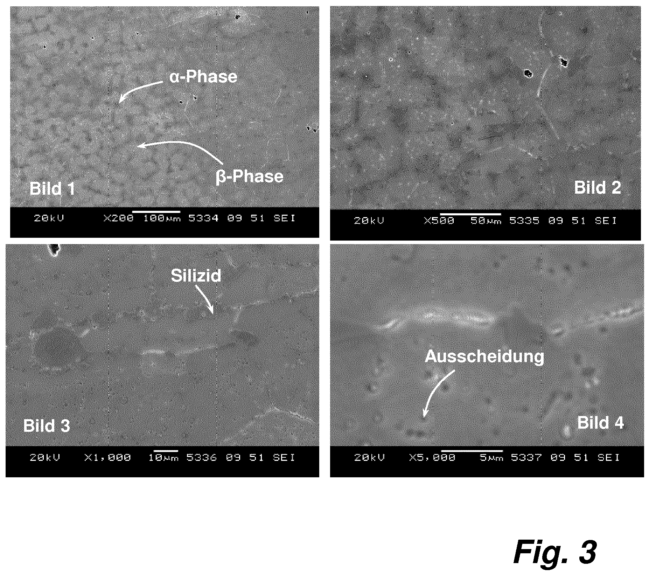

Die in Figur 3 wiedergegebenen rasterelektronenmikroskopischen Aufnahmen von der stranggepressten Probe lassen die nur geringe Größe der Ausscheidungen von deutlich weniger als 1µm erkennen.

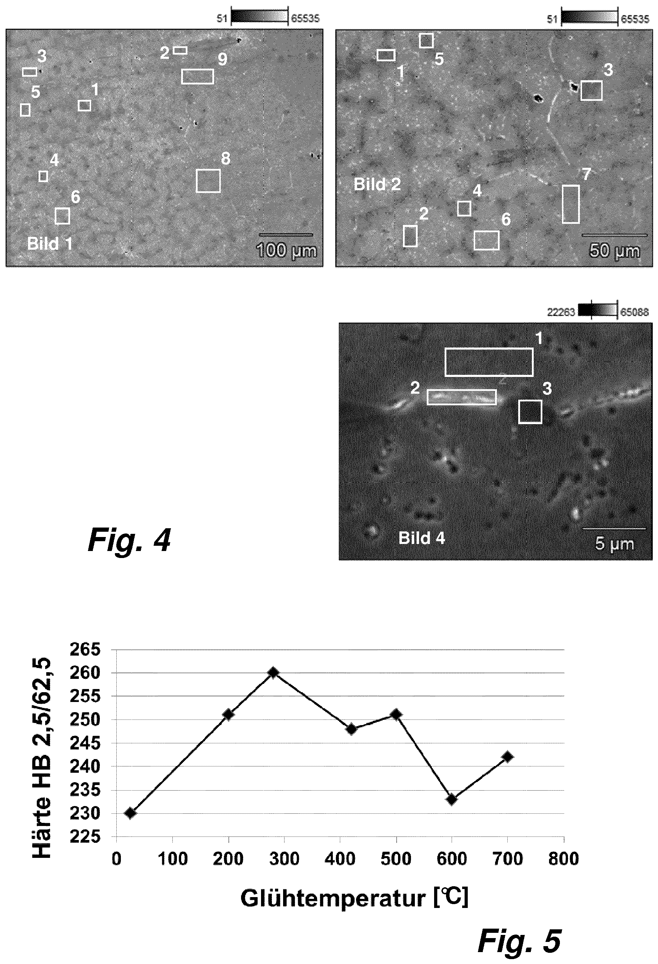

An den Bildern 1, 2 und 4 der rasterelektronenmikroskopischen Aufnahmen der Figur 3 wurden EDX-Analysen durchgeführt. Die Bereiche, in denen die EDX-Analysen aufgenommen worden sind, in Figur 4 kenntlich gemacht und in Tabelle 1 wiedergegeben.

Im Ergebnis kann festgestellt werden, dass Mangan überwiegend in den Siliziden abgebunden ist, während Zinn in der β-Phase gelöst ist. In gewissen Mengen wird Mangan auch in der α-Phase gelöst. Dieses ist besonders vorteilhaft, da dann aufgrund des in der β-Phase gelösten Zinn nicht nur ein β-Deckschichtbildner, sondern auch ein α-Deckschichtbildner (mit Mangan) vorhanden ist.

An der stranggepressten Probe wurden Härteuntersuchungen durchgeführt, und zwar in Bezug auf die Makrohärte und die Mikrohärte. Die Makrohärte wurde nach Brinell gemessen und führt zu einem Ergebnis von 266 HB 2,5/62,5. Die Mikrohärte wurde nach Vickers ermittelt. In der Matrix wurde eine Vickers-Härte von 254 - 270 HV 0.01 ermittelt. Die intermetallischen Phasen sind naturgemäß sehr viel härter. Hier wurden Härten zwischen 768 und 1047 HV 0.01 ermittelt.

Figur 5 zeigt das Aushärtungsverhalten beim Glühen der aus dieser Legierung hergestellten Probe. Dieses lässt deutlich werden, dass ein Aushärtungsmaximum zwischen 250 und 300°C gegeben ist. Zudem zeigen diese Proben keine oder nur eine vernachlässigbare Erweichung durch Anlasse bei höheren Temperaturen.

Diese Probe wurde anschließend auf verschiedene Festigkeitsparameter untersucht. Folgende Ergebnisse werden ermittelt:

| Rp0,2 [N/mm²] | Rm [N/mm²] | A [%] | Härte |
|---|---|---|---|
| 670 | 840 | 3,7 % | 266 HB 2,5/62,5 |

Diese Ergebnisse konnten an weiteren Probenkörpern verifiziert werden. Bei einer stranggepressten und geglühten Probe, die dieselbe Zusammensetzung aufweist wie die zuvor beschriebene, ergaben sich folgende Festigkeitswerte:

| Rp0,2 [N/mm²] | Rm [N/mm²] | A [%] | Härte |
|---|---|---|---|
| 592 | 727 | 3,5 % | 261 HB 2,5/62,5 |

Diese Proben zeigen insgesamt ein sehr feines Gefüge, eine hohe Festigkeit und Härte.

Die erstgenannte Probe wurde zusammen mit Referenzproben Korrosionstests unterworfen.

Zum Zwecke der Korrosionstests wurden die Proben zur Hälfte eingetaucht in ein Gemisch aus Motoröl, 20% Bioethanol E85 (85% Ethanol) und Schwefelsäure. Der ph-Wert war auf 2,6 eingestellt. Die Versuche wurden bei 60°C durchgeführt. Die Probe wurde in diesem Gemisch zwei Tage gehalten, anschließend ausgebaut und lichtmikroskopisch ausgewertet.

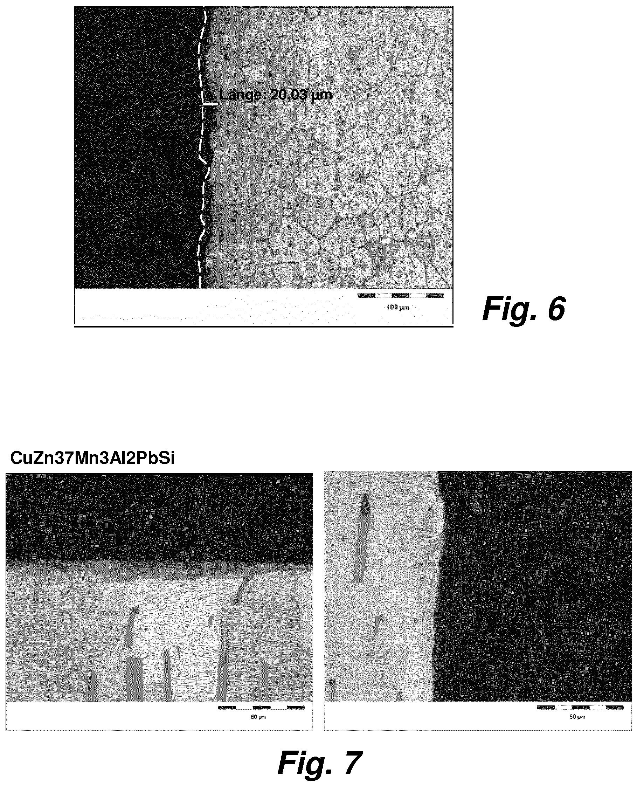

Figur 6 zeigt den dem Korrosionstest unterworfene Probenanteil. Diese lichtmikroskopische Aufnahme der Figur 6 zeigt, dass nur ein sehr geringer Korrosionsangriff vorliegt und somit tiefer liegendes Material wirksam vor Korrosion verschont geblieben ist. Zu beobachten ist bei dieser Probe die Ausbildung einer die tiefer liegenden Bereiche vor Korrosion schützenden Deckschicht. In der Figur ist diese bezüglich ihrer Dicke markiert. Gemessen wurde in einer geringfügigen Oberflächenvertiefung. Die Deckschicht ist in Figur 6 zum besseren Kenntlichmachen gestrichelt nachgezeichnet. Wie die Untersuchungen zeigen, ist diese Deckschicht gut haftend. Hervorzuheben ist, dass nicht nur die α-Phase, sondern auch die Korngrenzen und die β-Phase korrosionsresistent sind.

Figur 7 zeigt das Ergebnis einer Vergleichsprobe aus der Legierung CuZn37Mn3Al2PbSi, die mit denselben Parametern hergestellt und korrosionsgetestet worden ist. Deutlich erkennbar ist eine lokale Lagenbildung (vor allem linkes Bild).

Als Referenzprobe wurde auch eine solche aus der Legierung CuZn36 mit denselben Parametern hergestellt und korrosionsgetestet. Bei dieser Probe ist die Entstehung von Korrosionsrissen und eine Propfenentzickung zu beobachten.

Das rechte Bild in der unteren Reihe wurde zusätzlich in reiner hochkonzentrierter Schwefelsäure behandelt.

Die elektrische Leitfähigkeit dieser Probe beträgt 7,8 MS/m und liegt damit auf demselben Niveau wie die elektrische Leitfähigkeit der Vergleichlegierung CuZn37Mn3Al2PbSi. Somit zeigt sich, dass durch die korrosionssteigernden Maßnahmen die elektrische Leitfähigkeit gegenüber der Referenzprobe nicht, jedenfalls nicht nennenswert erhöht worden ist. Die elektrische Leitfähigkeit der anderen Referenzlegierung liegt bei 15,5 MS/m.

### Versuch 2:

In einer zweiten Versuchsreihe wurde aus einer Legierung folgender Zusammensetzung:

| | Cu | Mn | Sn | Fe | Ni | Al | Si | Co | Zn |
|---|---|---|---|---|---|---|---|---|---|
| Probe 2 | 61,2 | 1,5 | 1,5 | 0,8 | 3,0 | 3,8 | 1,4 | 1,2 | Rest |

Probestücke gegossen und stranggepresst.

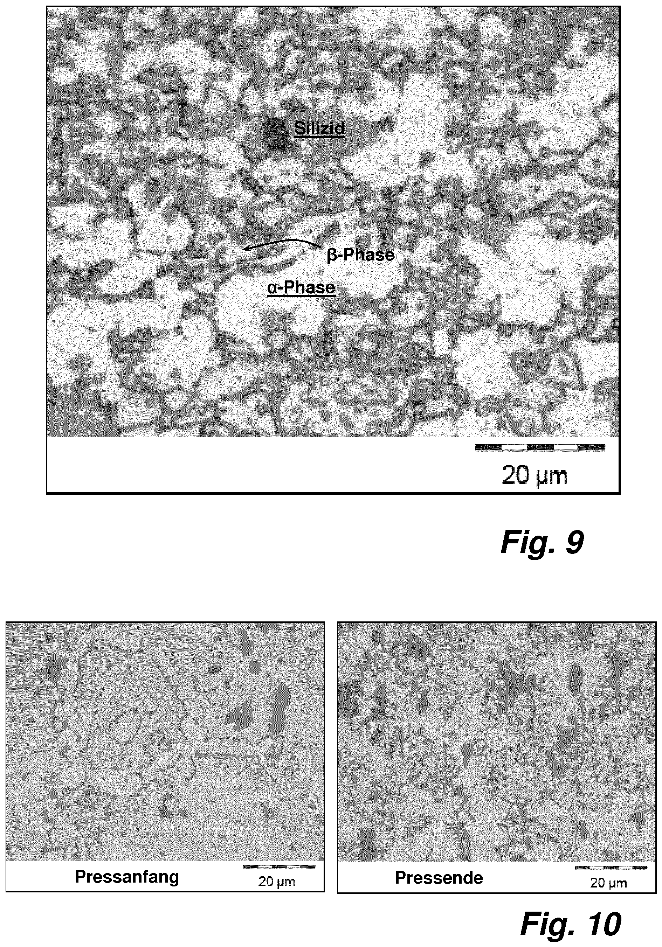

Die in Figur 9 gezeigte lichtmikroskopische Aufnahme der Gussprobe zeigt deutlich das Vorherrschen der β-Phase gegenüber der α-Phase. Erkennbar sind Silizide mit Korngrößen von etwa 5 - 7µm. Gegenüber der Legierung des Versuches 1 sind die Körner der α-Phase bei dieser Legierung deutlich größer als diejenigen der β-Phase.

Dasselbe Bild zeigt sich auch bei den stranggepressten Proben aus derselben Legierung, bei denen die Silizide aufgrund des Strangpressvorganges am Pressende (siehe Figur 10 rechts) bedingt durch den Pressvorgang gestreckt sind.

In den Proben beträgt der Anteil intermetallischer Phasen etwa 7%. Der α-Mischkristallanteil beträgt maximal 30%. Der Rest ist durch den β-Mischkristallanteil bestimmt. Aufgrund des hohen α-Anteils in der Legierung eignet sich diese besonders gut für eine Kaltnachbearbeitung.

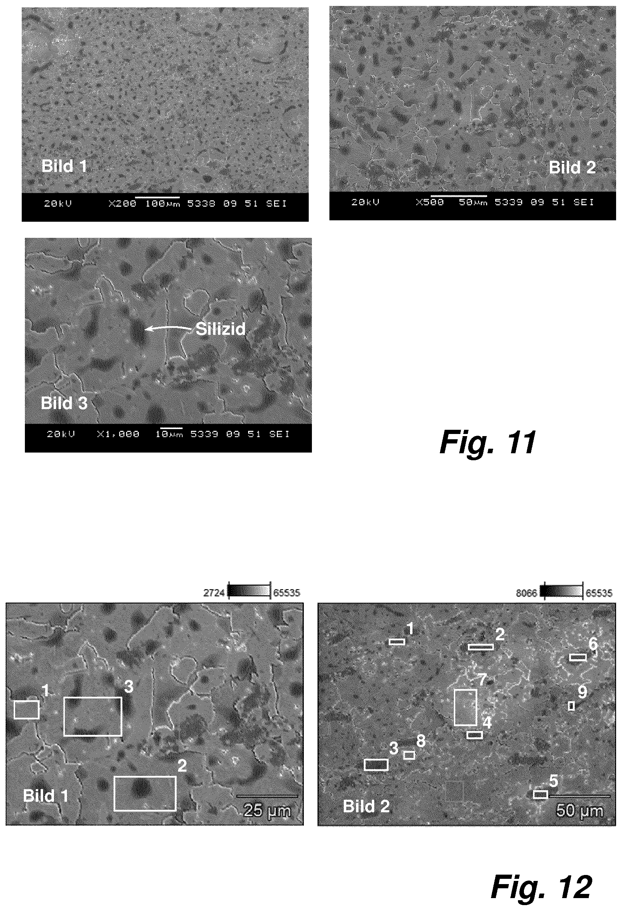

Die in Figur 11 wiedergegebenen rasterelektronenmikroskopischen Aufnahmen von der stranggepressten Probe lassen die nur geringe Größe der Ausscheidungen erkennen.

Figur 12 zeigt rasterelektronenmikroskopische Aufnahmen an Bereichen der Proben der Figur 11. Die Bereiche, in denen die EDX-Analysen aufgenommen worden sind, sind in Figur 12 kenntlich gemacht und in Tabelle 2 wiedergegeben.

Im Ergebnis kann festgestellt werden, dass Mangan überwiegend in den Siliziden abgebunden ist, während Zinn in der β-Phase gelöst ist. In gewissen Mengen wird Mangan auch in der α-Phase gelöst. Dieses ist besonders vorteilhaft, da dann aufgrund des in der β-Phase gelösten Zinn nicht nur ein β-Deckschichtbildner, sondern auch ein α-Deckschichtbildner (mit Mangan) vorhanden ist.

An der stranggepressten Probe wurden Härteuntersuchungen durchgeführt, und zwar in Bezug auf die Makrohärte und die Mikrohärte. Die Makrohärte wurde nach Brinell gemessen und führt zu einem Ergebnis von 204 - 225 HB 2,5/62,5. Die Mikrohärte wurde nach Vickers ermittelt. In der Matrix wurde eine Vickers-Härte von 129 - 172 HV 0.01 in der α-Phase und von 240 - 305 HV 0.01 ermittelt. Die intermetallischen Phasen sind naturgemäß sehr viel härter. Hier wurden Härten zwischen 826 und 961 HV 0.01 ermittelt.

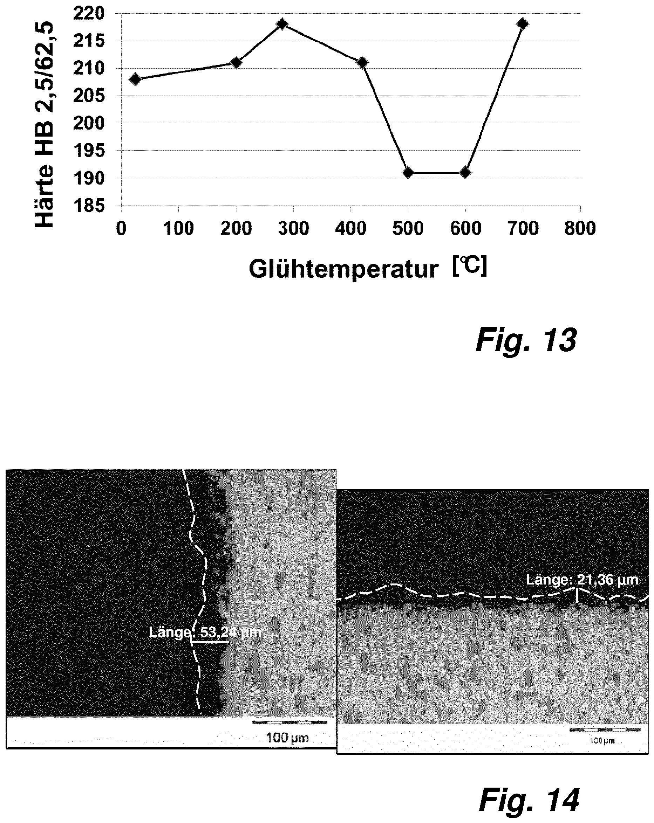

Figur 13 zeigt das Aushärtungsverhalten beim Glühen der aus dieser Legierung hergestellten Probe. Dieses lässt deutlich werden, dass ein Aushärtungsmaximum bei etwa 300°C gegeben ist. Oberhalb von 450°C ist eine deutliche Erweichung feststellbar. Durch Umwandlung der α-Phasenanteilen zu β-Phasenanteilen ist beim Glühen oberhalb von 600°C ein Härteanstieg zu beobachten.

Diese Probe wurde anschließend auf verschiedene Festigkeitsparameter untersucht. Folgende Ergebnisse werden ermittelt:

| Rp0,2 [N/mm²] | Rm [N/mm²] | A [%] | Härte |
|---|---|---|---|
| 455 | 680 | 4,7 | 244 HB 2,5/62,5 |

Diese Probe zeigt insgesamt ein sehr feines Gefüge, eine hohe Festigkeit und Härte.

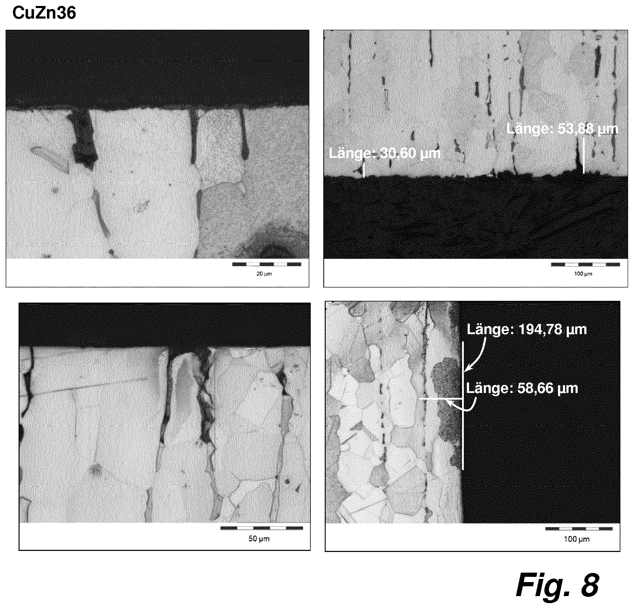

Die Probe wurde zusammen mit Referenzproben Korrosionstests unterworfen. Die Korrosionstests wurden durchgeführt, wie dieses bereits zu dem Versuch 1 erläutert ist. Als Referenzproben dienten dieselben Referenzproben wie bei dem Versuch 1. Diesbezüglich wird auf die Figuren 7 und 8 und die begleitenden Ausführungen verwiesen.

Figur 14 zeigt zwei lichtmikroskopische Fotografien der Probe aus der zweiten Legierung nach der Korrosionsbehandlung. Eine Deckschichtbildung ist zu beobachten. Damit bleibt tieferliegendes Material vor Korrosion wirksam verschont. Neben der α-Phase sind auch bei dieser Probe die Korngrenzen und die β-Phase korrosionsresistent.

Die elektrische Leitfähigkeit dieser Probe beträgt 6,8 MS/m und ist somit sogar noch geringer als die elektrische Leitfähigkeit der Referenzlegierung CuZn37Mn3Al2PbSi.

Ein Vergleich der mit der Legierung des Versuches 1 erzielten Ergebnisse mit denjenigen der Legierung des Versuches 2 lässt erkennen, dass die Legierung gemäß Versuch 1, die kein Cobalt enthält, zu einer deutlich stärkeren Ausscheidungshärtung bzw. Ausscheidungsverfestigung neigt. Bei der Legierung gemäß Versuch 2, die Cobalt enthält, begünstigt dieses Element die Bildung gröberer primärer Körner als Sekundärausscheidungen die Silizide. Die Ergebnisse zeigen, dass Cobalt die Kinetik der Silizidbildung beeinflusst. Wenn eine höhere Silizidbeteiligung gewünscht ist, wird man die Legierung ohne Cobalt oder nur mit einem geringen Cobaltanteil auslegen. Die Unterschiede in der Ausbildung der β-Phase sind ebenfalls der Beteiligung von Cobalt bzw. der Nichtbeteiligung von Cobalt zuzuschreiben. Cobalt wirkt stabilisierend auf die α-Phase.

## Patentansprüche

1. Sondermessinglegierung mit
55 - 65 Gew.-% Cu;
1 - 2,5 Gew.-% Mn;
0,7 - 2 Gew.-% Sn;
0,2 - 1,5 Gew.-% Fe;
2 - 4 Gew.-% Ni;
2 - 5 Gew.-% Al;
0,2 - 2 Gew.-% Si;
max. 2,0 Gew.-% Co;
max. 0,1 Gew.-% Pb;
und Rest Zn nebst unvermeidbaren Verunreinigungen,
wobei die Summe der Elemente Mn und Sn mindestens 1,7 Gew.-% und maximal 4,5 Gew.-% beträgt.

2. Sondermessinglegierung nach Anspruch 1, **dadurch gekennzeichnet, dass** an der Legierung die Elemente Mn und Sn in einem Verhältnis zwischen 1,25 und 0,85 Mn zu Sn beteiligt sind.

3. Sondermessinglegierung nach Anspruch 2, **dadurch gekennzeichnet, dass** das Verhältnis der Elemente Mn zu Sn zwischen 1,1 und 0,92 beträgt.

4. Sondermessinglegierung nach einem der Ansprüche 1 bis 3 mit 59- 65 Gew.-% Cu;
1,3 - 1,65 Gew.-% Mn;
1,3 - 1,65 Gew.-% Sn;
0,5 - 1,0 Gew.-% Fe;
2,4 - 3,4 Gew.-% Ni;
3,1 - 4,1 Gew.-% AI;
1,0 - 1,7 Gew.-% Si;
max. 2,0 Gew.-% Co;
und Rest Zn nebst unvermeidbaren Verunreinigungen.

5. Sondermessinglegierung nach Anspruch 4 mit
59 - 62 Gew.-% Cu;
1,3 - 1,65 Gew.-% Mn;
1,3 - 1,65 Gew.-% Sn;
0,5 - 1,0 Gew.-% Fe;
2,4 - 3,4 Gew.-% Ni;
3,1 - 4,1 Gew.-% AI;
1,0 - 1,7 Gew.-% Si;
und Rest Zn nebst unvermeidbaren Verunreinigungen.

6. Sondermessinglegierung nach Anspruch 4, **dadurch gekennzeichnet, dass** der Co-Gehalt 0,9 - 1,6 Gew.-%, insbesondere 0,9 - 1, 5 Gew.-% und weiterhin insbesondere 0,9 - 1,1 Gew.-% beträgt.

7. Sondermessinglegierungsprodukt, hergestellt aus einer Sondermessinglegierung nach einem der Ansprüche 1 bis 6, **dadurch gekennzeichnet, dass** dieses überwiegend aus β-Phase besteht.

8. Sondermessinglegierungsprodukt nach Anspruch 7 in seinem Rückbezug auf Anspruch 5, **dadurch gekennzeichnet, dass** der Anteil an α-Phase kleiner als 10 % ist.

9. Sondermessinglegierungsprodukt nach Anspruch 7 in seinem Rückbezug auf Anspruch 4 oder 6, **dadurch gekennzeichnet, dass** der Anteil an α-Phase kleiner als 35 % ist.

10. Sondermessinglegierungsprodukt nach einem der Ansprüche 7 bis 10, **dadurch gekennzeichnet, dass** der Anteil intermetallischer Phasen zwischen 5 und 9 % beträgt.

11. Sondermessinglegierungsprodukt nach einem der Ansprüche 7 bis 10, **dadurch gekennzeichnet, dass** die elektrische Leitfähigkeit <10 MS/m beträgt.

12. Sondermessinglegierungsprodukt nach Anspruch 11, **dadurch gekennzeichnet, dass** die elektrische Leitfähigkeit des Sondermessinglegierungsproduktes <8,2 MS/m beträgt.

13. Sondermessinglegierungsprodukt nach einem der Ansprüche 7 bis 12, **dadurch gekennzeichnet, dass** es sich bei diesem Legierungsprodukt um ein Lagerteil handelt, vorzugsweise zum Einsatz in einem Lager in einer Ölumgebung mit möglicherweise saurem Milieu.

14. Sondermessinglegierungsprodukt nach Anspruch 13, **dadurch gekennzeichnet, dass** es sich bei dem Lagerteil um ein Teil für ein Turboladerlager handelt.

## Claims

1. Special brass alloy with
55 - 65 wt.% Cu;
1 - 2.5 wt.% Mn;
0.7 - 2 wt.% Sn;
0.2 - 1.5 wt.% Fe;
2 - 4 wt.% Ni;
2 - 5 wt.% Al;
0.2 - 2 wt.% Si;
max. 2.0 wt.% Co;
max. 0.1 wt.% Pb;
the remainder being Zn and unavoidable impurities, wherein the sum of the elements Mn and Sn amounts to at least 1.7 wt.% and maximum 4.5 wt.%.

2. Special brass alloy according to claim 1, **characterised in that** in the alloy the elements Mn and Sn are present in a ratio of between 1.25 and 0.85 Mn to Sn.

3. Special brass alloy according to claim 2, **characterised in that** the ratio of the elements Mn to Sn is between 1.1 and 0.92.

4. Special brass alloy according to any one of claims 1 to 3, with 59 - 65 wt.% Cu;
1.3- 1.65 wt.% Mn;
1.3 - 1.65 wt.% Sn;
0.5- 1.0 wt.% Fe;
2.4 - 3.4 wt.% Ni;
3.1 - 4.1 wt.% Al;
1.0 - 1.7 wt.% Si;
max. 2.0 wt.% Co;
the remainder being Zn and unavoidable impurities.

5. Special brass alloy according to claim 4, with
59 - 62 wt.% Cu;
1.3- 1.65 wt.% Mn;
1.3 - 1.65 wt.% Sn;
0.5- 1.0 wt.% Fe;
2.4 - 3.4 wt.% Ni;
3.1 - 4.1 wt.% Al;
1.0 - 1.7 wt.% Si;
the remainder being Zn and unavoidable impurities.

6. Special brass alloy according to claim 4, **characterised in that** the Co content amounts to 0.9 - 1.6 wt. %, in particular 0.9 - 1.5 wt. %, and more particularly 0.9 - 1.1 wt. %.

7. Special brass alloy product manufactured from a special brass alloy according to any one of claims 1 to 6, **characterised in that** this consists predominantly of β-phase.

8. Special brass alloy product according to claim 7 in its reference back to claim 5, **characterised in that** the proportion of α-phase is less than 10%.

9. Special brass alloy product according to claim 7 in its reference back to claim 4 or 6, **characterised in that** the proportion of α-phase is less than 35%.

10. Special brass alloy product according to any one of claims 7 to 10, **characterised in that** the proportion of intermetallic phases amounts to between 5 and 9 %.

11. Special brass alloy product according to any one of claims 7 to 10, **characterised in that** the electrical conductivity amounts to <10 MS/m.

12. Special brass alloy product according to claim 11, **characterised in that** the electrical conductivity of the special brass alloy product amounts to <8.2 MS/m.

13. Special brass alloy product according to any one of claims 7 to 12, **characterised in that** this alloy product is a component of a bearing, preferably for use in a bearing in an oil environment, possibly with acidic surroundings.

14. Special brass alloy product according to claim 13, **characterised in that** the component of a bearing is a component for a turbocharger.

## Revendications

1. Alliage de laiton spécial comportant
55 à 65 % de poids de Cu ;
1 à 2,5 % de poids de Mn ;
0,7 à 2 % de poids de Sn ;
0,2 à 1,5 % de poids de Fe ;
2 à 4 % de poids de Ni ;
2 à 5 % de poids d'Al ;
0,2 à 2 % de poids de Si ;
max. 2,0 % de poids de Co ;
max. 0,1 % de poids de Pb ;
et le reste en Zn, auxquels s'ajoutent les inévitables impuretés,
la somme des éléments Mn et Sn s'élevant au moins à 1,7 % de poids et au maximum à 4,5 % de poids.

2. Alliage de laiton spécial selon la revendication 1, **caractérisé en ce que** les éléments Mn et Sn sont utilisés dans l'alliage selon une proportion située entre 1,25 et 0,85 de Mn par rapport à Sn.

3. Alliage de laiton spécial selon la revendication 2, **caractérisé en ce que** la proportion des éléments Mn par rapport à Sn est située entre 1,1 et 0,92.

4. Alliage de laiton spécial selon l'une des revendications 1 à 3, comportant
59 à 65 % de poids de Cu ;
1,3 à 1,65 % de poids de Mn ;
1,3 à 1,65 % de poids de Sn ;
0,5 à 1,0 % de poids de Fe ;
2,4 à 3,4 % de poids de Ni ;
3,1 à 4,1 % de poids d'Al ;
1,0 à 1,7 % de poids de Si ;
max. 2,0 % de poids de Co ;
et le reste en Zn, auxquels s'ajoutent les inévitables impuretés.

5. Alliage de laiton spécial selon la revendication 4, comportant 59 à 62 % de poids de Cu ;
1,3 à 1,65 % de poids de Mn ;
1,3 à 1,65 % de poids de Sn ;
0,5 à 1,0 % de poids de Fe ;
2,4 à 3,4 % de poids de Ni ;
3,1 à 4,1 % de poids d'Al ;
1,0 à 1,7 % de poids de Si ;
et le reste en Zn, auxquels s'ajoutent les inévitables impuretés.

6. Alliage de laiton spécial selon la revendication 4, **caractérisé en ce que** la teneur en Co s'élève à 0,9 à 1,6 % de poids, plus particulièrement à 0,9 à 1,5 % de poids et par ailleurs plus particulièrement à 0,9 à 1,1 % de poids.

7. Produit d'alliage de laiton spécial fabriqué en alliage de laiton spécial selon l'une des revendications 1 à 6, **caractérisé en ce que** celui-ci est majoritairement composé d'une phase β.

8. Produit d'alliage de laiton spécial selon la revendication 7, avec son renvoi à la revendication 5, **caractérisé en ce que** la part de phase α est inférieure à 10 %.

9. Produit d'alliage de laiton spécial selon la revendication 7, avec sa référence à la revendication 4 ou 6, **caractérisé en ce que** la part de phase α est inférieure à 35 %.

10. Produit d'alliage de laiton spécial selon l'une des revendications 7 à 10, **caractérisé en ce que** la part de phases intermétalliques se situe entre 5 et 9 %.

11. Produit d'alliage de laiton spécial selon l'une des revendications 7 à 10, **caractérisé en ce que** la conductivité électrique s'élève à < 10 MS/m.

12. Produit d'alliage de laiton spécial selon la revendication 11, **caractérisé en ce que** la conductivité électrique du produit d'alliage de laiton spécial s'élève à < 8,2 MS/m.

13. Produit d'alliage de laiton spécial selon l'une des revendications 7 à 12, **caractérisé en ce que** ce produit d'alliage est une pièce de palier pour une utilisation privilégiée dans un palier dans un environnement huileux, dans un milieu éventuellement acide.

14. Produit d'alliage de laiton spécial selon la revendication 13, **caractérisé en ce que** la pièce de palier est une pièce destinée à un turbocompresseur.
